# DEMANDE DE BREVET EUROPEEN

(11) **EP 1 330 065 A1**
(43) Date de publication de la demande: **23.07.2003**
(21) Numéro de dépôt: 03290133.2
(22) Date de dépôt: 21.01.2003
(51) Int. Cl.: H04L 7/00

(54) **Récepteur et procédé de réception peu sensible au phénomène d'évanouissement**

(30) Priorité: 22.01.2002 FR 0200765
(71) Demandeur: Thales, 75008 Paris (FR)
(72) Inventeur: Fievre, Bruno, THALES Intellectual Property, 94117 Arcueil cedex (FR)
(74) Mandataire: Lucas, Laurent

(57) **Abrégé**

Procédé de réception d'un signal comprenant un ou plusieurs messages. Il comporte les étapes suivantes :
1) sur détection ou réception d'un front dans le signal reçu, déclencher un cycle de comptage Nc,
2) lorsque Nc est égal à un nombre M de tops de l'horloge de génération Hg, émettre un front montant de l'horloge de réception et déclencher un nouveau cycle de comptage Nc,
3) lorsque la nouvelle valeur de Nc est égale à un nombre M de tops d'horloge, faire passer l'horloge Hr à zéro, et simultanément
   3.1) en cas de réception d'un front dans le signal reçu, émettre un nouveau front d'horloge lorsque Nc=M,
   3.2) en cas de non réception dans le signal reçu, émettre un nouveau front d'horloge décalé d'une valeur de 1/(M+1) lorsque Nc = M,
4) exécuter les étapes 1) et 2) tant que l'en-tête n'est pas détecté,
5) sur détection d'un en-tête, émettre un signal Header Found, arrêter les étapes 1), 2), 3) et 3.1), et transmettre ce signal à une étape de traitement.

## Description

L'objet de la présente invention concerne notamment un récepteur de signal et un procédé de réception très peu sensible au phénomène d'évanouissement (absence de transmission de signal), voir insensible à ce phénomène.

Elle concerne aussi tous les démodulateurs qui ont tendance à se désynchroniser lorsqu'il se produit un phénomène d'évanouissement sur la voie radio et ceci plus particulièrement dans le domaine haute fréquence (HF).

Elle est aussi applicable dans tous les dispositifs de transmission de données qui utilisent une synchronisation et qui sont susceptibles de perdre des informations, notamment dans le domaine des radio-communications.

Les démodulateurs, en particulier dans le domaine HF, utilisent généralement des synchrobits pour décoder les messages. Ces synchrobits correspondent à la génération d'une horloge à partir du signal de données reçues. En présence d'évanouissement sur la voie radio (absence de transmission durant un message), le démodulateur se désynchronise, ce qui entraîne un décalage dans les bits reçus conduisant à une perte irrémédiable des données reçues après l'évanouissement.

Pour pallier cet inconvénient, les techniques habituellement utilisées dans l'art antérieur consistent, par exemple, à émettre à nouveau les messages perdus en totalité ou en partie ou encore à transmettre le même message sur plusieurs canaux radio afin d'augmenter la probabilité de bonne réception des données.

L'invention concerne un procédé de réception d'un signal comportant un ou plusieurs messages ayant une structure composée d'au moins un bloc de synchronisation (partie I), suivi d'un en-tête (partie II) et d'un bloc de données à transmettre (partie III), le procédé fait appel à une fréquence de transmission fournie par exemple par une horloge de transmission et à une fréquence de réception issue d'une horloge de réception par exemple. Il est caractérisé en ce qu'il comporte au moins les étapes suivantes:
**Synchronisation**
   1) sur détection ou réception d'un front dans le signal reçu, déclencher un cycle de comptage Nc,
   2) lorsque la valeur de Nc est égale à un nombre M de tops de l'horloge de génération Hg émettre un front montant de l'horloge de réception et déclencher un nouveau cycle de comptage Nc,
   3) lorsque cette nouvelle de valeur de Nc (obtenue à l'étape 2) est égale à un nombre M de tops de l'horloge de génération Hg, faire passer l'horloge Hr à zéro, et simultanément
      3.1) en cas de réception d'un front dans le signal reçu, le compteur Nc commence à compter M coups avant d'émettre un nouveau front d'horloge,
      3.2) en cas de non réception dans le signal reçu, le compteur Nc commence à compter M + 1 coups avant d'émettre un nouveau front d'horloge décalé d'une valeur de 1/(M+1)
   4 ) exécuter les étapes 1) et 2) tant que l'en-tête n'est pas détecté,
**Reconnaissance de l'en-tête**
   5) sur détection d'un en-tête (dernier bit de l'en-tête reçu), émettre un signal Header Found, exécuter les étapes 1), 2), 3) et 3.1) et transmettre le signal Header Found à une étape de traitement.

La fréquence de l'horloge de réception Hg peut être égale à N fois la fréquence de transmission des données, le nombre M égal à N/2 et le nombre N égal à 16 ou 64, de préférence égal à 16 et M égal à 8.

Le procédé et le dispositif selon l'invention présentent notamment l'avantage de s'affranchir simplement du problème de perte de synchronisation sans remettre en cause les méthodes classiques de génération d'horloge, ainsi que les architectures des modems, des démodulateurs ou des dispositifs de modulation et démodulation.

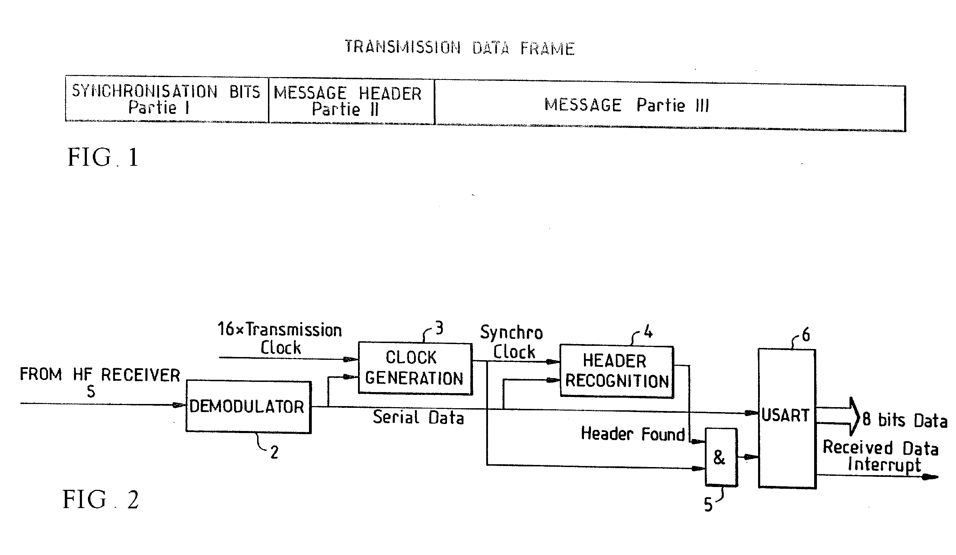

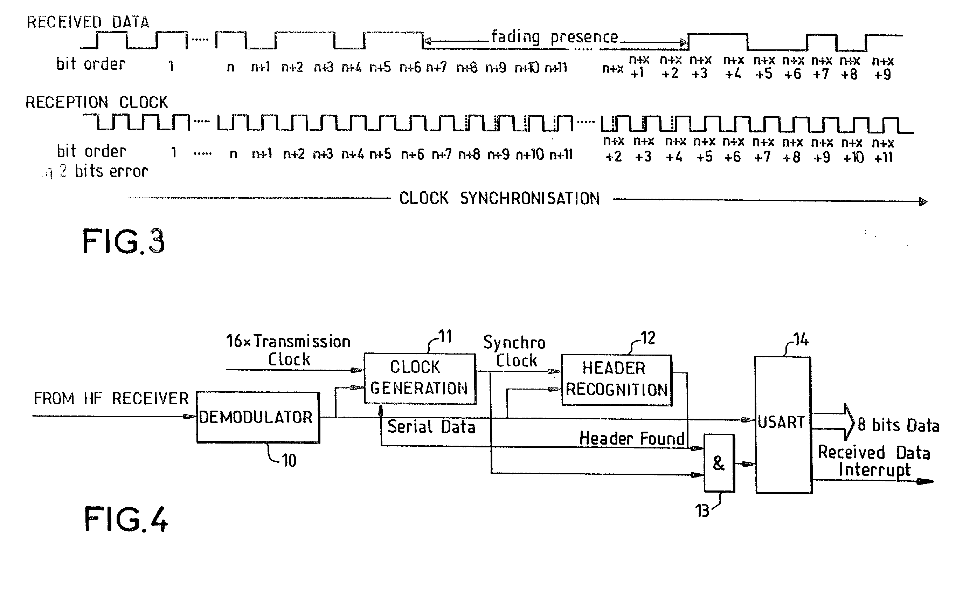

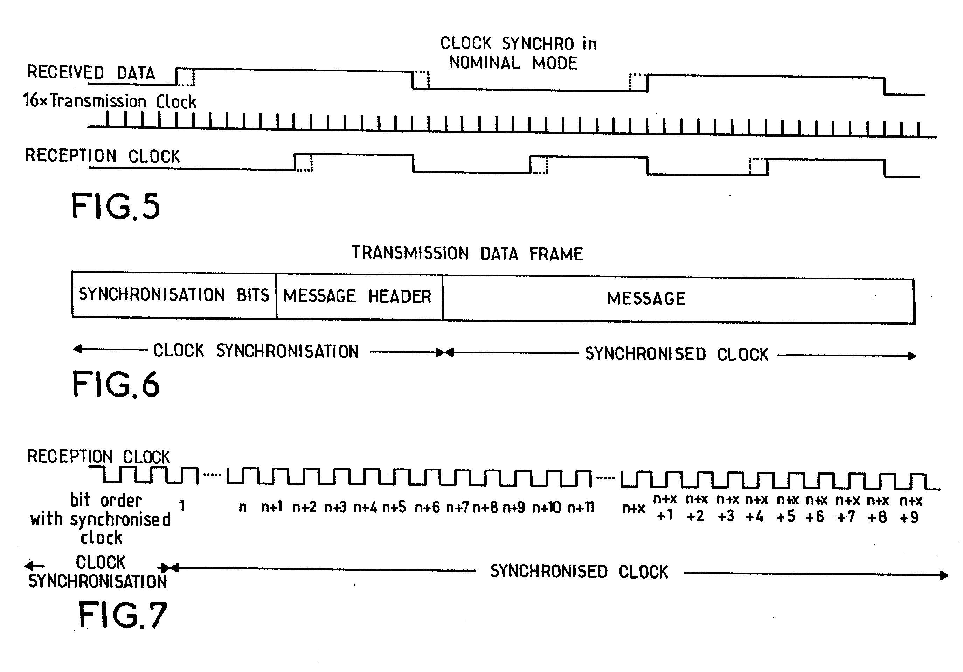

D'autres caractéristiques et avantages de l'invention apparaîtront mieux à la lecture de la description qui suit, donnée à titre illustratif et nullement limitatif en regard des figures annexées qui représentent :
■ La figure 1 la structure d'un message reçu par un démodulateur,
■ La figure 2 un synoptique d'une chaîne de réception selon l'art antérieur,
■ La figure 3 un chronogramme traduisant le problème d'une désynchronisation de 2 bits dans un modem selon l'art antérieur,
■ La figure 4 un synoptique d'un exemple de chaîne de réception selon l'invention,
■ La figure 5 un chronogramme présentant la génération d'une horloge de réception selon l'invention,
■ La figure 6 les phases de synchronisation/désynchronisation d'horloge,
■ La figure 7 un chronogramme schématisant le résultat de l'insensibilité au fading.

Afin de mieux faire comprendre le principe exploité dans le procédé selon l'invention, la description qui suit est donnée à titre illustratif et nullement limitatif pour un démodulateur utilisé dans le domaine HF. Sans sortir du cadre de l'invention, elle s'applique aussi à tous les démodulateurs ou à tous les dispositifs de modulation-démodulation ou encore à tout dispositif, dans lesquels le décodage des données reçues fait appel à une synchronisation.

Avant de décrire l'objet de la présente invention, quelques données utiles à sa compréhension sont rappelées.

La figure 1 représente un exemple de structure d'un message échangé sur la voie radio. Il comporte 3 parties distinctes :
■ **La Partie I** comporte plusieurs bits de synchronisation constitués d'une suite de 0 et de 1 (0, 1, 0, 1, 0, etc.) de durée variable utilisés notamment pour calibrer la chaîne de réception, en particulier le démodulateur,
■ **La Partie II** est constituée d'un en-tête de message ou « header » constitué d'une séquence prédéfinie permettant de reconnaître la réception d'un message dans le flot des informations issues du démodulateur,
■ **La Partie III** est le corps du message proprement dit, comprenant les données utiles.

Le récepteur reçoit un signal constitué en règle générale, soit de bruit (suite aléatoire de 0 et de 1), soit d'un message ayant une structure telle que celle décrite à la figure 1. Selon l'art antérieur, la chaîne de réception comporte par exemple un démodulateur 2, un circuit 3 de génération d'horloge et tous les autres éléments nécessaires à la réception et au décodage des signaux reçus, ces éléments étant connus de l'Homme du métier. Le circuit 3 de génération d'horloge a notamment pour fonction d'élaborer une horloge synchronisée sur chacun des bits reçus, ou horloge de réception Hr. La synchronisation se fait, par exemple, à partir du premier front de chaque bit du signal reçu. L'horloge de réception est utilisée pour introduire les données reçues dans les circuits de reconnaissance de l'en-tête de message (4) puis (pour le corps du message) dans le circuit de parallélisation des données (USART6). La fonction de ce dernier est de paralléliser des informations reçues en série suivant un rythme qui correspond à la valeur de l'horloge (de transmission) prédéterminée.

L'horloge de réception Hr est générée par exemple à partir d'une horloge fixe Hg ayant une fréquence Fg *N fois supérieure à la fréquence Ft de transmission des données. La valeur N est par exemple égale à 16 ou 64 valeurs classiquement choisies dans les UART. La synchronisation d'horloge s'effectue à la réception de chaque bit afin que l'horloge soit en phase avec celui-ci. La synchronisation se fait en plus ou en moins, par pas de 1/Nème de la fréquence de réception à partir du front du bit reçu, par exemple 1/16ème.

Cette technique présente toutefois l'inconvénient d'être sensible au phénomène d'évanouissement, ce qui conduit à une perte de données reçues. En effet, la synchronisation s'effectuant à la réception du front d'un bit, en cas de durée d'évanouissement trop importante on observe une désynchronisation qui se traduit par exemple par un top d'horloge en trop (supplémentaire) qui entache toute la fin du message. Par exemple, cela se produit lorsque la durée de cet évanouissement est supérieure à la réception de 8 bits successifs ou après un nombre M préfixé de bits.

Ce phénomène est représenté à la figure 3 qui schématise un chronogramme traduisant un décalage de 2 bits lors de la réception du message (évanouissement de 2 fois 8 bits pour une horloge Fg de fréquence16 fois supérieure à la fréquence de transmission Ft).

L'idée de la présente invention consiste notamment à décomposer la réception d'un message en deux parties : la synchronisation d'horloge permanente : dans le bruit, durant la réception des bits de synchronisation et de l'en-tête, puis l'arrêt de la synchronisation d'horloge dès que l'en-tête du message est reconnu.

La figure 4 décrit un exemple de synoptique de la chaîne de réception intégrée par exemple dans un dispositif de démodulation utilisé dans le domaine HF.

Les signaux S reçus par le récepteur 1 sont transmis au démodulateur 10. En sortie de ce démodulateur, le signal se présente sous la forme de bits 0 et 1, signal S1. S1 est constitué en règle générale de bruit ou d'un message de structure telle que celle donnée à la figure 1 par exemple. Le signal S1 est transmis à un circuit de génération d'horloge 11, au circuit de reconnaissance d'en-tête 12 et aussi à l'USART 14 par exemple sous la forme de données série.

Le circuit de génération d'horloge 11 reçoit aussi une horloge Hg dont la fréquence Fg est par exemple égale à 16 fois la fréquence de transmission Ft utilisée pour transmettre les données.

Ce circuit de génération d'horloge 11 peut être réalisé en hardware ou software suivant les valeurs d'horloge. Il comporte, entre autre, un compteur Nc connu de l'Homme du métier et utilisé lors de la génération d'une horloge de synchonisation Hr ou horloge de réception en utilisant notamment l'horloge Hg. Le circuit de génération d'horloge comporte aussi un dispositif de détection des bits de synchro.

Le démodulateur comporte aussi un moyen permettant de reconnaître l'en-tête du message qui se présente sous une forme hardware ou logiciel. Le choix entre ces deux variantes est fonction par exemple de la fréquence des informations.

Les étapes exécutées par le procédé sont décrites à titre illustratif et nullement limitatif dans le cas où le détection se fait sur les bits de synchronisation du message.

### Etapes de synchronisation

1) Dès la réception d'un front d'un bit reçu (en sortie du circuit de démodulation), un dispositif adapté et connu de l'Homme du métier transmet cette information au compteur Nc qui déclenche alors un cycle de comptage.
2) Lorsque la valeur Nc du compteur est par exemple égale à M = 8 coups d'horloge (pour une horloge 16 fois supérieure à l'horloge de transmission), le circuit de génération d'horloge émet un front montant de l'horloge Hr de réception (horloge synchronisée avec les bits reçus). La fréquence Fr correspondante est alors égale à la fréquence de transmission Ft. Le front d'horloge Hr coïncide par exemple sensiblement au milieu d'un bit (milieu du créneau temporel correspondant à un 0 ou un 1 par exemple). Le compteur Nc est par exemple réinitialisé et redémarre un nouveau cycle de comptage,
3) au bout de 8 coups d'horloge par exemple, (la nouvelle valeur de Nc est comptée à partir du déclenchement nouveau cycle de comptage et est égale à 8), le circuit fait passer l'horloge Hr à 0, et il vérifie s'il reçoit un front correspondant à la fin du bit transmis, il remet la valeur du compteur Nc à 0 (initialisation),
   3.1) en cas de réception d'un front (dans le signal reçu à la sortie du circuit de démodulation), le compteur recommence à compter M+1 = 8 coups, avant de générer un nouveau front d'horloge Hr.
   3.2) en cas de non réception d'un front, le circuit génère automatiquement un front d'horloge décalé d'un seizième (comptage de M = huit coups d'horloge + un), ce dernier front se présente temporellement sous la forme d'un créneau de durée variable puisque asservi à la variabilité temporelle des bits reçus. Le décalage temporel du front de l'horloge ne peut pas dépasser un seizième d'horloge.

### Reconnaissance de l'en-tête

Les étapes 1) à 2) sont effectuées tant que le circuit de détection n'a pas reconnu l'en-tête.
4) Après la reconnaissance de l'en-tête du message S₁, le procédé :
   4.1) émet un signal Header Found (S_{HF}) du circuit de reconnaissance de l'en-tête vers le circuit de génération d'horloge afin d'arrêter les étapes prémentionnées de synchronisation (dans l'étape 3.2, le compteur est limité à M = 8 coups d'horloge). Le procédé suppose à ce moment que l'horloge de réception est synchronisée (l'en-tête ayant été reçu, la chaîne de réception est considérée fonctionner correctement), ceci est notamment représenté à la figure 5. On continue les étapes de synchronisation 1), 2), 3) et 3.1).
   4.2) transmet ce signal (S_{HF}) à un circuit de type « ET » logique 13 qui reçoit aussi l'horloge de réception Hr générée, servant de base au décodage des données. Le circuit « ET » permet le passage de l'horloge de réception Hr à l'USART 14 dont la fonction définie précédemment est de paralléliser les données reçues à la fréquence de l'horloge de réception.

### Génération du signal

L'USART génère ainsi un signal sous la forme de mots de 8 bits par exemple et tous les autres signaux habituellement générés.

Avantageusement, les étapes du procédé selon l'invention offrent la possibilité de générer une horloge sans discontinuité même en présence d'évanouissement ou en l'absence de signal.

## Revendications

1. Procédé de réception d'un signal comportant un ou plusieurs messages, un message ayant une structure composée d'au moins un bloc de synchronisation (partie I), suivi d'un en-tête (partie II) et d'un bloc de données à transmettre (partie III), le procédé fait appel à une fréquence d'horloge de transmission, à une fréquence d'une horloge de réception, **caractérisé en ce qu'**il comporte au moins les étapes suivantes :
**Synchronisation**
1) sur détection ou réception d'un front dans le signal reçu, déclencher un cycle de comptage Nc,
2) lorsque la valeur de Nc est égale à un nombre M de tops de l'horloge de génération Hg, émettre un front montant de l'horloge de réception et déclencher un nouveau cycle de comptage Nc,
3) lorsque la nouvelle valeur de Nc, obtenue à l'étape 2), est égale à un nombre M de tops d'horloge, faire passer l'horloge Hr à zéro, et simultanément
3.1) en cas de réception d'un front dans le signal reçu, le compteur Nc commence à compter M coups avant d'émettre un nouveau front d'horloge,
3.2) en cas de non réception dans le signal reçu, le compteur Nc commence à compter M+1 coups avant d'émettre un nouveau front d'horloge décalé d'une valeur de 1/(M+1),
4 ) exécuter les étapes 1) et 2) tant que l'en-tête n'est pas détecté,
**Reconnaissance de l'en-tête**
5) sur détection d'un en-tête, émettre un signal Header Found, exécuter les étapes 1), 2), 3) et 3.1), et transmettre le signal Header Found à une étape de traitement.

2. Procédé selon la revendication 1 **caractérisé en ce que** la fréquence de l'horloge de réception Hg est égale à N fois la fréquence de transmission des données et **en ce que** le nombre M est égal à N/2.

3. Procédé selon la revendication 2 **caractérisé en ce que** le nombre N est égal à 16 ou 64, de préférence égal à 16 et M égal à 8.

4. Procédé selon l'une des revendications 1 à 3 **caractérisé en ce que** la valeur Nc est remise à zéro lors de l'émission du front montant de l'horloge de réception.

5. Procédé selon la revendication 1 **caractérisé en ce que** l'étape de traitement de signal comporte les étapes suivantes : transmettre le signal Head Founder et l'horloge de réception Hr à un circuit « ET » logique afin de déclencher la parallélisation des données reçues à la fréquence de l'horloge de réception.

6. Récepteur peu sensible ou insensible au phénomène d'évanouissement comportant au moins un démodulateur (10), un circuit de génération d'horloge (11), un circuit (12) de reconnaissance de l'en-tête du message, un USART (14) **caractérisé en ce qu'**il comporte un dispositif adapté à mettre en oeuvre les étapes décrites selon l'une des revendications 1 à 5 de procédé.
